# EUROPEAN PATENT APPLICATION

(11) **EP 4 512 754 A1**
(43) Date of publication of application: **26.02.2025**
(21) Application number: 23192391.3
(22) Date of filing: 21.08.2023
(51) Int. Cl.: B65G 47/86, B25J 15/12, B65B 35/16, B67C 7/00

(54) **A GRIPPING DEVICE, A TRANSPORT ASSEMBLY AND METHOD FOR TRANSPORTING A CONTAINER**

(71) Applicant: Körber Pharma, Inc., Gargo, ND 58102 (US)
(72) Inventor: Monson, Andrew, West Fargo, 58078 (US); Hein, Tyler, Fargo, 58102 (US)
(74) Representative: Müller Schupfner & Partner Patent- und Rechtsanwaltspartnerschaft mbB (Muc)

(57) **Abstract**

A gripping device (10) for transporting a container (12), preferably pharmaceutical container (12), is provided. The gripping device (10) comprising a support element (13) configured to support the container (12), and a flexible element (14) configured to grab the container (12). Further, a transport assembly (22) and a method for gripping a container (12) is provided.

## Description

The present invention relates to a gripping device for transporting a container, to a transport assembly for transporting containers and to a method for transporting containers.

It is common to transport containers using flat conveyor belts on which the bottom of a product, for example a vial or bottle, rides on a flat surface of the conveyor belt. Consequently, such conveyor belts may only be suitable for transportation in a mainly horizontal direction. On such conveyors, especially for small containers, backpressure is needed to keep the containers in an upright position. However, the containers may come in contact with each other and may get damaged. There are further limitations and disadvantages of this type of conveyor belt. A conveyor belt as described requires guides on the sides of the conveyor belt. Flat conveyor belts which have containers placed on top of the conveyor belt may only be moved horizontally, in a straight line and around corners. On a flat conveyor belt, height changes are only possible in a very limited extend to prevent the containers from tipping over and getting damaged. Consequently, even small changes in the vertical direction require a high technical effort.

Therefore, it is found that a further need exists to provide a possibility for a transporting containers like vials or bottles.

In view of the above, it is an object of the present invention to provide a possibility that allows to move or transport containers, in particular vials or bottle, freely in a horizontal and/or a vertical direction without the drawbacks of the known prior art.

These and other objects, which become apparent upon reading the following description, are solved by the subject matter of the independent claims. The dependent claims refer to preferred embodiments of the invention.

According to a first aspect of the present invention, a gripping device for transporting a container, preferably pharmaceutical container, is provided. The gripping device may comprise support element configured to support the container, and a flexible element configured to grab the container.

In contrast to the known prior art, the present invention provides a gripping device that is configured to transport only one container per gripping device. Accordingly, a contact between different containers may be avoided. Because the container likely contains liquid, the container can be heavy. The weight of the container may be supported by the support element of the gripping device, not only by the flexible element. Further, the flexible element may provide controlled holding force to gently hold the container during transport. For example, the holding force may be adaptable depending on the kind and/or size of the container to be transported. Thus, a large range of different containers (e.g., even fragile containers) may be transported by the gripping device.

The gripping device is configured to interact with the container. The container may be a vial, a bottle or similar containers individually in 3 dimensions. Such containers are common in the pharmaceutical manufacturing, packaging industry and in the food industry. Other types of containers from the above-mentioned industries or other industries may be possible. It is also possible that the container is designed as a full body object. The support element is configured to support the gripping device by absorbing the weight of the container. That is, the support element may receive a force created by the weight of the container (e.g., a force directed in the direction of gravity). The support element may comprise a rigid material. Further, the support element may be configured to be directly or indirectly in contact with the container. In case the support element is directly in contact with the container, the load introduced by the container into the gripping device can be optimally supported or compensated. In case the support element is in indirect contact with the container, the support element may support the flexible element which may be in direct contact with the container. This provides the advantage that the flexible element may be adapted to the container in size and/or shape and may only partly be burdened by the load of the container. Thus, the durability of the whole system may be increased. The support element may be an inflexible element. The support element may be a rigid element. Accordingly, even heavy containers may be readily supported by the support element. The support element may not have any moveable or flexible parts. Therefore, the durability of the support element may be increased.

The flexible element is configured to grab the container. To do so, the flexible element may clamp around a part of the container. The part of the container which may be grabbed by the flexible element may correspond to the dimensions of the flexible element. The flexible element may be configured to grab and/or hold the container. Furthermore, the flexible element may apply a holding force to the container, when the container is grabbed. The holding force may be a restoring force of the flexible element. In other words, the support element may be the element for mainly supporting the container (e.g., the weight of the container). The flexible element may be configured to grab the container (e.g., to grab the container from a handoff position). For example, the handoff position may be a position where the gripping device take over a handling of a container. That is, the flexible element may grab the container and may guide the container to the support element. In other words, the flexible element may be configured to lead the container to a support position in which the support element may support the container. Accordingly, a proper position of the container in the gripping device could be secured.

Compared to the known prior art, the present invention is characterized in particular by the fact that the use of the gripping device according to the invention makes it possible to successfully grip and transport a container. Especially, the containers may be transported individually (i.e., each container may be handled alone without influencing other containers and without being influenced by other containers). The flexible element may provide a controlled holding force to gently hold the container during transport. Because of the gripping device, guides (e.g., continuous guides such as rails) along a conveyor are no longer required to maintain control of the containers and to prevent the containers from tipping over. The gripping device may passively hold a container, for example at a neck of the container. The gripping device may be compliant to a range of container diameters without the need to change parts along the gripping device and/or a conveyer. The location where the gripping device contact the container may be away from sensitive surfaces of the container, for example a cap of a vial. Therefore, various container cap designs may be handled by the gripping device. Because the containers are likely to contain a liquid, the containers might have a certain weight. The weight of the container is supported by the support element of the gripping device. As a result, the flexible element is relieved from supporting the weight of the container alone.

In an embodiment, the gripping device comprises a connection portion configured to connect the gripping device to a transport device. The connection portion may be configured to connect the gripping device to a further device. For example, the connecting portion may connect the gripping device to a conveyer (i.e., a transport device). Further, the connection portion may connect the gripping device to a robot handling container. The transport device may be a plastic flexible link style chain conveyor. Accordingly, a conveyer could be provided with integrated grippers which is configured to individually transport containers.

Preferably, the connection portion comprises at least one engaging element configured to connect the gripping device in a positive locking manner to the transport element. Accordingly, the gripping device may be mounted to the transport device without the use of tools or other instruments. Hence, the maintenance may be significantly facilitated. In particular, the gripping device may comprise two or more engaging elements. As a result, the gripping device may be fixed to the transport device such that it is properly held even by fast moving velocities and/or by transporting heavy containers.

Preferably the transport device is a clip chain conveyor. The clip chain conveyor, also known as the separation conveyor, is a side-flexing conveyor using an endless chain as a traction mechanism. The clip chain conveyor is mainly used for transporting separate items. One gripping device may be assigned to one clip of the clip chain conveyor. By holding a container individually, the clip chain conveyor can be freely routed and the containers can be properly held by the gripping device even when the clip chain conveyor is transporting the containers in sharp corners and/or with a steep elevation change. The connection portion may provide a connection in a positive locking manner. Alternative connection types, for example force-fitting connections, may be also possible. The container may be a pharmaceutical phial, an ampulla or the like. The container may have a bottom portion, a body, a neck and a cap. The cap may provide accessibility to the inside of the container. The body of the container may be provided between the neck and the bottom portion. The neck may be provided between the cap and the body.

In one embodiment of the present invention, the connection portion comprise a protrusion and/or a receptacle for fixing the gripping device to the transport device. Accordingly, the gripping device may be mounted to the transport device by interaction of the protrusion and/or the receptacle with a corresponding mounting portion of the transport device. In this way, the gripping device may be sufficiently fixed to the transport device without the need for use of tools.

In an embodiment, the connection portion comprises latching means to provide a clip connection. The clip connection may be a flexible clip connection, such that the connected gripping device may be movable in one or multiple directions, preferable in three dimensions. The clip connection allows an easy assembly the gripping device. For example, it may be possible to form a chain of gripping devices, that are connected to each other and/or to the transport device. Accordingly, a rigid system may be provided suitable for transporting heavy containers.

In an embodiment, the latching means comprise a latching element and a latching receptacle, which are configured to interact with each other. For example, the latching element may be a pin and the latching receptacle may be a corresponding retainer. The latching element and the corresponding latching receptacle provide an easy possibility to form the clip connection.

According to an embodiment of the present invention, the flexible element is configured to be moved with respect to the support element. In other words, the flexible element is deformable, wherein the support element is not deformable during a normal operation of the gripping device. Further, the flexible element may actively grab the container. The support element may be configured to passively hold the container. Further, the flexible element may be configured to actively hold the container. In summary, the flexible element may be an active element, whereas the support element may be a passive element.

According to an embodiment of the present invention, the flexible element is configured to be transferred between a receiving position and a holding position. The receiving position and the holding position may be different positions of the flexible element. The flexible element may be elastically deformable. In particular, the receiving position may be a deformed state of the flexible element. The holding position may be the non-deformed or initial position of the flexible element. The flexible element may be transferred between the two positions, by applying an external force onto the flexible element. The flexible element may be configured to automatically return to the holding position (e.g., by elastic properties of the flexible element and/or by a biasing force applied to the flexible element) when the flexible element is deformed toward the receiving position. That is, the flexible element may always tend to return to the holding position. Accordingly, the holding of the container can be secured independent of the state of surrounding systems.

Further, in the receiving position the flexible element may be configured to grab the container. The flexible element may be deformed to the receiving position by applying an external force onto the flexible element. For example, the container may be pressed against the flexible element, when the flexible element is in the holding position. In return, the flexible element may deform from holding position to the receiving position. For example, the flexible element may have a receiving space or receiving portion for receiving the container. In the holding position the receiving space is not accessible for the container. On the other hand, in the receiving position, the receiving space is accessible for the container. Once the container enters into the receiving space, the flexible element may automatically deform back to the holding position. During this deformation from the receiving position (e.g., also referred to as the open position), the container can be grabbed in the direction of the receiving space of the flexible element. Once the flexible element is in the holding position (e.g., also referred to as the closed position), the container may be held by the flexible element. In the holding position the container may not exit the receiving space. Thus, the container is held by the flexible element. In other words, in the holding position the flexible element is configured to hold the container.

In one embodiment, the flexible element comprises two holding arms. The two arms may be moveable with respect to each other. In the present case, movement of the arms may be considered as deformation of the flexible element. The arms may define the receiving space of the flexible element. The two arms may be moveable with respect to the support element. In the holding position, the holding arms may be substantially parallel to each other. Thus, the flexible element may exhibit a rigid structure in the holding position. Further, a sufficiently spaced receiving space is defined by the arms. Nevertheless, the flexible element may comprise more than two arms, for example 3, 4, 5 or more. Important is that the flexible element may grab the container using these arms. In addition, the holding arms may be moved towards each other and vice versa. Therefore, both arms may be moved by transition between the holding position and the receiving position. Preferably, the movement of the arms may be synchronized. For example, both arms may move between the both positions in the same amount and/or manner. As a result, a container may be smoothly grabbed and/or held by the flexible element.

In an embodiment, the flexible element may be arranged adjacent to the support element. In other words, the flexible element may be arranged directly adjacent (i.e., next to) to the support element. That means, no other component may be arranged between the support element and the flexible element. The flexible element may be in contact with the support element. Furthermore, the flexible element may be connected to the support element. This feature allows the support element to absorb the weight of the container and relieving the flexible element of said weight.

In an embodiment, the flexible element comprises two holding arms, which are connected by an elastic element, wherein the elastic element is configured to apply a holding force to the holding arms. The holding arms may be components of the gripping device, which are configured to be in direct contact with the container. The elastic element provides a simple means of applying a spring or restoring force to the flexible element. The elastic element of the gripping device may be integrated without any fastener, for example screws. The elastic element may be hooked to the holding arms. The elastic element may be configured to apply a restoring force to the flexible element in case the flexible element is deformed from the holding position. That is, the elastic element urges the flexible element towards the holding position. In other words, in the holding position the elastic element may not apply the restoring force to the flexible element. The holding arms may be connected to each other by the elastic element. Accordingly, the elastic element can provide a restoring force that urges the holding arms to move toward each other (i.e., into the holding position). In other words, in the holding position, the holding arms may be arranged closer to each other than in the receiving position. Accordingly, in the receiving position the container may be placed between the holding arms, whereas in the holding position the container is held between the arms. In addition, the flexible element may be configured to eject the container by a transition from the holding position to the receiving position in case a container is present between the holding arms. According, a container may be actively pushed out of the gripping device. The transition between the holding position and the receiving position may be initiated by applying an external force onto the flexible element. For example, the container may be pushed towards an outside of the flexible element and due to the pushing out function of the flexible element, the container may be advantageously ejected from the gripping device. Hence, a process speed may be increased while the process reliability is secured. In particular, the holding arms can be pivotably mounted at a mounting position on the gripping device. The mounting position may be at a tip end of the arms. Alternatively, the mounting position may be between the tip ends of each arm. In this case, the push out function of the holding arms can be increased.

In addition, the holding arms may have a curved portion. The curved portion may correspond to the outer shape of the container. Thus, the container may be sufficiently held by the flexible element (e.g., by the arms). Moreover, by providing the curved portion, the push out function may be improved.

In an embodiment, the elastic element comprises a spring, for example a screw spring, or a synthetic material, for example an elastomer. The screw spring may be easily adapted to the desired biasing force (dependent on the type of container to be transported). The synthetic material may be a low-maintenance part. Thus, the maintenance of the gripping device may be facilitated.

In an embodiment, each holding arm comprises a fitting portion configured to be fitted to the container to be grabbed. In other words, the recess forms a retainer for the container. The fitting portion may be provided additionally or alternatively to the curved portion. The fitting portion may comprise a soft and/or elastic material. The fitting portion may be in contact with a container held by the gripping device. The fitting portion may prevent a direct contact between the holding arms (the flexible element) and the container. Thus, the container may be prevented from being scratched by the holding arms. The fitting part may be a cushion for the support arms. This also helps prevent damage to fragile containers when handling them. The fitting portion may correspond to an outer shape of the container. This allows optimum adaptation to the gripped container.

In an embodiment, the flexible element and/or the support element comprises an at least partially rounded geometry. The at least partially rounded geometry may correspond at least partially to the container. Therefore, the container may be sufficiently received, grabbed and/or held by the gripping device. In addition, due to the rounded geometry the gripping device may have smaller dimensions. That is, the receiving space within the gripping device may be defined by the at least partially rounded geometry. As a result, the receiving space may be efficiently adapted to the actual size of a container to be transported.

In an embodiment, the gripping device is configured to hold a vial and/or an at least partially round and/or cylindrical container element, in particular with a neck and a cap.

In an embodiment, the gripping device comprises a guide element. The guide element may be configured to secure the container during transport thereof. This prevents errors and allows for a smoother operation. The guide element may be a ramp, wherein the slope of the ramp is ascending in a first direction which a container takes when it is grabbed by the flexible element. The ramp may be configured to come in contact with a container to be transported. That is, the container may be guided by the ramp into a proper position in which it can be gently held by the flexible element. For example, the ramp may help the container to pass protrusions or other elements which may disturb the grabbing of the container. Therefore, the container may be readily received by the gripping device. In a second direction taken by the container when it is ejected by the gripping device from the position in which it is held by the gripping device to a position in which it is not held by the gripping device, the ramp may include a wall portion (i.e., no ramp). That is, the second direction may be oriented opposite to the first direction. Accordingly, the container may be prevented from falling out of the gripping device. In particular, the wall portion can prevent the container from falling out only in certain positions of the container within the gripping device. For example, if the container is supported from below by a base, the container may be pushed upward so that it contacts the wall portion. In such a position, ejection of the container from the gripping device may not be possible. This can improve the pick-up situation of the container, as the container can be supported from below at a defined height in this situation. Due to the ramp of the guide element, the container may easily be picked up by the gripping device. The wall portion may effectively prevent the container from being ejected or falling down. As a result, the process step of picking up the container may be significantly improved in terms of error-proneness.

In an embodiment, the gripping device defines an interior space in which the container can be at least partially received. The interior space may be also referred to as the receiving space and vice versa (refer to the above outlined). The interior space may be at least partly surrounded by the flexible element. In this way the container may be gently held by the flexible element. The interior space may be configured to receive a cap of the container. Therefore, the cap of the container is securely received by the gripping device. In other words, the cap of the container, which is sometimes a sensitive part of the container, does not come into direct contact with the gripping device and is therefore not involved in holding the container. In addition, as the cap does not contribute to holding the container, the interior space allows the design of different container caps.

In an embodiment, the gripping device comprises an abutment for definition a position of the flexible element. The flexible element may have an equilibrium state in which no forces (e.g., internal elastic forces) act on the flexible element. Such equilibrium state may be the holding position of the flexible element. However, in some cases it may be desirable that the holding position may not be the equilibrium state of the flexible element. This may be desirable if in the holding position some elastic forces should be present to securely hold the container, for example. In this case an abutment may be provided which is configured to be a limit or stop for the deformation of the flexible element. In other words, the abutment may be configured to define the holding position of the flexible element. The holding arms may be in direct contact with the abutment in the holding position. As a result, heavy container may be sufficiently held by the gripping device.

In an embodiment, the gripping device comprises a top element. The upper element can cover the interior at its top. To top element may provide a connection between the support element and the flexible element on the one side and the connection portion on the other side. The guide element may be arranged at the top element. Therefore, the guide element may be in a proper position to guide a container. The top element may comprise a through hole for fixing the gripping device (i.e., the support element and the flexible element) to a transport device. In other words, the support element and the flexible element may be directly fixed to the transport device via the top element. Due to the through hole, the gripping device may be readily mounted to the transport device using available bolts or screws.

In a further aspect of the present invention, a transport assembly for transporting containers may be provided. The transport assembly may comprise at least two gripping devices according to any one of the embodiments above, wherein the gripping devices are connected to the transport device. The transport assembly of gripping devices may be alternatively described as a non-contact clip chain. The transport device may be a flexible link style chain conveyor. The gripping devices may be integrated with transport device. The transport assembly may be configured for transporting containers individually, in particular vials or bottles, preferably in three dimensions. The gripping devices are preferably made from a plastic material. The transport assembly provides a means to transport containers over and around obstacles without letting go of the container. During transportation of containers with the transport assembly, the containers do not contact each other. Therefore, a damage due to glass on glass contact may be prevented. Further, it is readily possible to transport containers in all three spatial directions. The transport assembly may further include a feeding device. The feeding device may be configured to bring the containers in a position which is suitable for the gripping device to grab the containers. As the gripping device may be configured to grip the containers between its cap and its body, the containers must preferably be positioned accordingly. In this way, the feeding device may be configured to hold the containers such that the upper part, preferably the upper third of the container, are arranged such that the gripping device may grab the container there. For example, the feeding device may be configured to change the vertical position of the container with respect to the feeding device. Consequently, the container may be sufficiently grabbed by the gripping device. Further, the transport assembly may comprise an unloading device. The unloading device may be configured to remove a container from a gripping device. The unloading device may comprise a guide wall or a baffle configured to redirect a container held by the gripping device. As a result, the container may be urged to exit the gripping device. In particular, an external force may be applied to the gripping device by the unloading device to eject the container. This allows the container to be easily released from the gripping device.

Preferable, the gripping devices are connected to the transfer device in a positive locking manner, in particular by the engaging element. Therefore, the gripping devices may be mounted and demounted from the transport device without the use of tools. Further, the gripping devices may be sufficiently held at the transport device.

Moreover, the gripping devices are moveable with respect to each other. For example, the gripping devices may be mounted to the transport device in a pivotable manner such that the gripping devices may be moveable with respect to the transport device. Accordingly, the gripping devices may be adapted to specific positions in which containers are to be received and/or ejected.

In an embodiment, the transport assembly is configured to be flexible in three dimensions. In other words, the transport device may be movable horizontally, vertically and in curves. The transport assembly may be configured to transport the containers in three dimensions. This allows to easily bypass obstacles. Furthermore, transport assembly may be designed to be more compact as compared to known systems.

In an embodiment, the transport assembly comprises at least two types of gripping devices differing from each other. More precisely, the transport assembly may comprise a first gripping device configured to grab a first type of container and a second gripping device configured to grab a second type of container, wherein the first type of container and the second type of container have different geometries or dimensions, in particular different circumferences or diameters. Therefore, the transport device can be used to transport differently configured containers without the need for significant adjustments to the transport device. The two types of gripping device may be are arranged in an alternating manner. Therefore, the transport assembly may be easily implemented and adapted in an existing processing stream. For example, the first gripping device may be followed by the second gripping device, the second gripping device may be followed again by the first gripping device and so on. Other alternating orders of two or more types of gripping devices may also be possible.

In a further aspect of the present invention, a conveyor system may be provided. The conveyor system may comprise a transport assembly according to any one of the above-mentioned embodiments, a conveyor flight and a feeding device. The feeding device may be used to feed containers to the gripping devices of the transport assembly. The conveyor flight may be the part of the transport device configured for suspended transport of the containers.

A further aspect of the present invention may be a use of a container, in particular a vial or a bottle, with a gripping device according to one of the above-mentioned embodiments or with an assembly according to one of the above-mentioned embodiments or with a conveyor system according to the embodiment above. A further aspect of the present invention may be the use of a gripping device with a transport system, in particular a conveyor system.

According to a further aspect of the present invention a method for gripping a container is provided. The method may comprise contacting a container with a flexible element, grabbing the container with the flexible element, holding the container by a support element. That is, the flexible element may be deformed by contact with the container. By being deformed, the flexible element may be deformed from the holding position toward the receiving position. Once the receiving position is reached, the container may be received into the receiving or interior space. Then, the flexible element may be deformed so as to reach the holding position again. For this process the container may be pressed towards the flexible element by an external force. For example, the container may be transported towards the gripping device by a further transport device (e.g., a star wheel or a transport screw). For ejecting the container from the gripping device, an external force may be applied to the container. For example, the container may be transported along a baffle or wall which is inclined with respect to the transport direction of the container.

Thus, the baffle or wall will apply a force onto the container. In return, the container may apply a force onto the flexible element which is then deformed from the holding position to the receiving position. Once the flexible element has reached the receiving position, the container may be ejected from the gripping device. This provides a simple system for individual transport of containers in all three spatial directions.

Features and embodiments may be combined with other features or other embodiments to form new embodiments. Advantages and embodiments of the features and embodiments also apply to the new embodiments. Advantages and embodiments explained in connection with the device apply mutatis mutandis to the method and vice versa.

In the following, the present disclosure is described exemplarily with reference to the enclosed figures, in which
- **Fig.** 1: is a perspective and schematical view of a gripping device according to an embodiment of the present invention, holding a container;
- **Fig.** 2: is a perspective and schematical view of a gripping device according to an embodiment of the present invention;
- **Fig.** 3: is a schematical top view of the gripping device according to an embodiment of the present invention;
- **Fig.** 4: is a schematical side view of the gripping device according to an embodiment of the present invention;
- **Fig.** 5: is a schematical front view of the gripping device according to an embodiment of the present invention;
- **Fig.** 6: is a perspective and schematical view of the gripping device according to an embodiment of the present invention, holding a container;
- **Fig. 6a**: a schematical view of a gripping device according to an embodiment of the present invention connected to a connection portion;
- Fig. 6b: a schematical view of a gripping device according to an embodiment of the present invention connected to a connection portion;
- Fig. 7: is a perspective and schematical view of another embodiment of a gripping device according to an embodiment of the present invention;
- Fig. 8: is a perspective and schematical view of the gripping device according to an embodiment of the present invention, holding a container;
- Fig. 9: is a perspective and schematical view of a transport device including a plurality of gripping devices, according to an embodiment of the present invention; and
- Fig. 10: is a perspective and schematic view of a transport assembly according to an embodiment of the present invention.

To facilitate an understanding of embodiments, principles, and features of the present disclosure, they are explained hereinafter with reference to implementation in illustrative embodiments. In particular, they are described in the context of being a system and a method for transporting containers. Embodiments of the present disclosure, however, are not limited to use in the described systems or methods.

The components and materials described hereinafter as making up the various embodiments are intended to be illustrative and not restrictive. Many suitable components and materials that would perform the same or a similar function as the materials described herein are intended to be embraced within the scope of embodiments of the present invention.

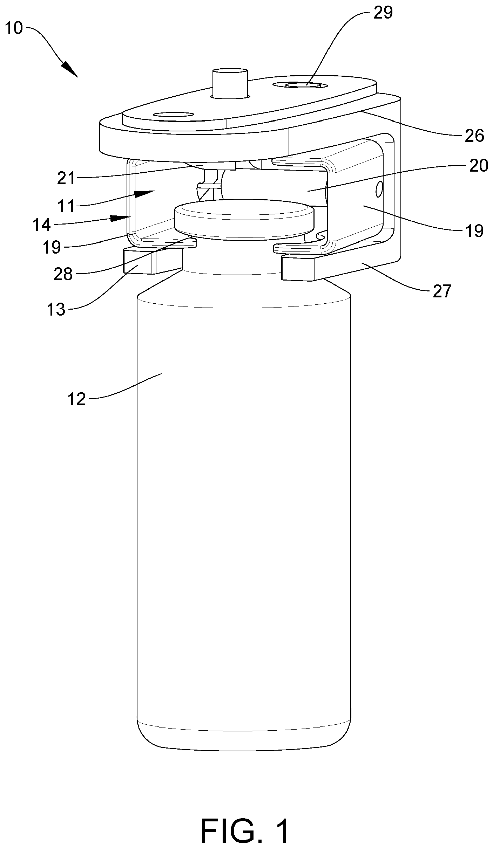

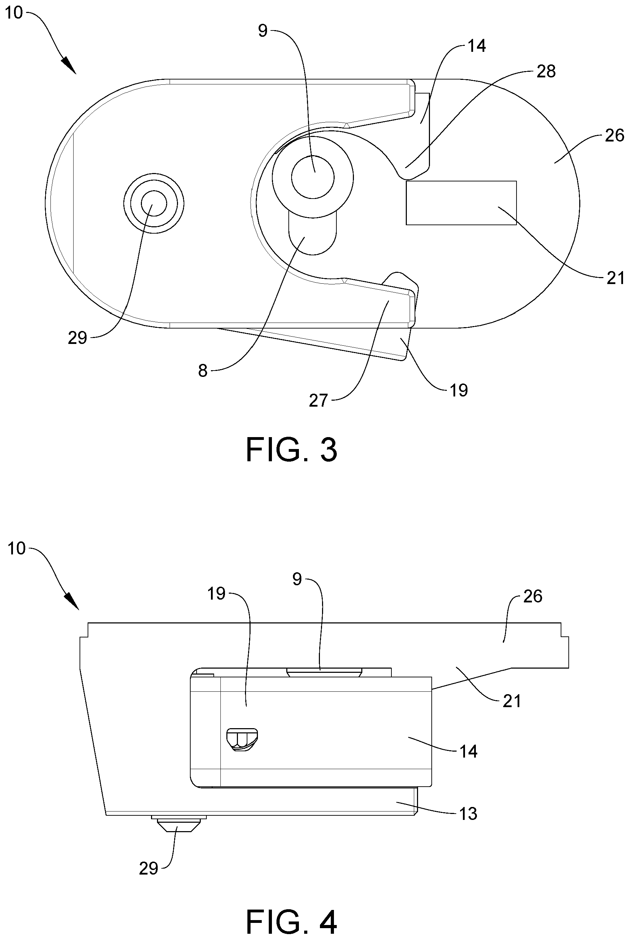

**Fig. 1** shows a gripping device 10 according to an embodiment of the present invention. The gripping device 10 comprises a support element 13 and a flexible element 14. The flexible element 14 is arranged between the support element 13 and a top portion 26. The top portion 26 and the support element 13 are connected to each other at one of their ends and form a U-shape structure in side view (see Fig. 4). The top portion 26 and the support element 13 are formed as an integral element. Accordingly, an advantageous rigidity of the gripping device may be attained.

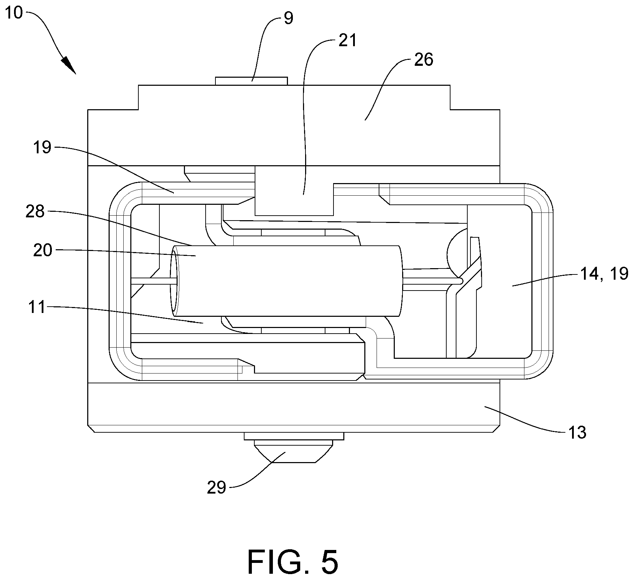

The support element 13 has a tip end that is u-shaped and configured to receive a container (e.g., a neck of a container). In other words, the support element 13 comprises a recess at one tip end. The recess comprises a circular geometry. The recess provides a retaining space for the container 12 and allows to hold the container 12 after pick up. The tip end of the support element 13 comprises two finger elements 27. The two finger elements 27 are arranged opposite to each other and are distanced by the recess in the support element 13. The flexible element 14 comprises two holding arms 19. Each holding arm 19 is configured as a symmetrical profile element with a U-shaped cross section (in a front view, refer to Fig. 5). Alternatively, other forms may be possible. The holding arms 19 may also be described as grippers. The flexible element 14 may be transferable between a holding position (depicted in Fig. 1) and a receiving position. In the holding position, the flexible element 14 may hold the container 12. In the receiving position, the flexible element 14 may pick up a container or eject a container from the gripping device 10. The holding arms 19 are arranged opposite to each other. Each holding arm 19 comprises a recess with a circular geometry. The outline of each circular geometry of the two holding arms 19 corresponds essentially to the outline of the circular geometry of the support element 13. The holding arms 19 comprise projections 28. The projections 28 are arranged at the tip ends of holding arms 19, respectively. Each projection 28 forms a hook. The projections 28 secure the container 12 between the holding arms, during operation. In this embodiment, the projections 28 comprise part of the circular geometry. Other projections with other geometries may be possible. The holding arms 19 are connected by an elastic element 20. The holding arms 19 are connected by the elastic element 20 at the tip ends of the holding arms 19 opposite to the projections 28. The elastic element 20 may be a spring, for example a screw spring. Alternatively, the elastic element 20 may comprise a synthetic material, for example an elastomer. The holding arms 19 are connected by a pin element 29. The pin element 29 extents in a direction orthogonal to a main extension of the container 12 held by the gripping device 10. The pin element 29 is arranged in a through hole through the top portion 26 and the holding arms 19. The pin element 29 forms an axis of rotation of the holding arms 19.

The elastic element 20 provides a restoring force. The restoring forces is applied to the holding arms 19. Further, the restoring force is directed such that the holding arms 19 are urged towards each other. This means that the holding means 19 provide a holding force to hold the container 12. The holding force may also be described as gripping force. During operation, after the container 12 surpasses a certain point, the container 12 may be drawn or pulled between the holding means 19 by the holding-/gripping force. In addition, by applying an external force onto the flexible element 14 it may be transferred to a receive position in which the holding arms 19 are pulled away from each other such that a container 12 may be inserted into an insertion or interior space.

The top portion 26 comprises a guide element 21. The guide element 21 is arranged on a surface of the top portion 26 that faces towards the interior space. The guide element 21 is formed as a ramp, wherein the slope of the ramp is inclined towards the interior space. The guide element 21 allows to guide the container 12 between the holding arms 19. This feature helps to protect the container, since the cap of such a container 12 may be for example fragile and easy to damage.

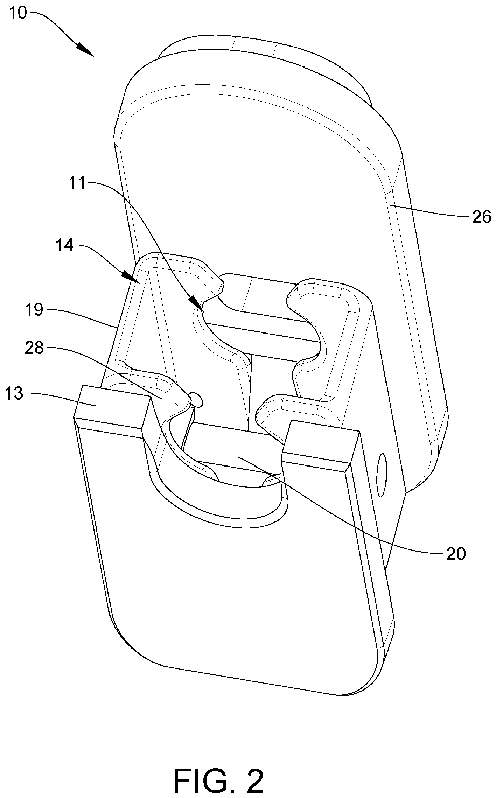

**Fig. 2** is a perspective and schematical view of a gripping device according to an embodiment of the present invention. The embodiment of fig. 2 essentially corresponds to the embodiment depicted in fig. 1 with the amendment that the guide element is omitted in the present embodiment. Further, in fig. 2 the container is omitted, too. Accordingly, the interior space 11 is visible. In contrast to fig. 1, the pin element 29 is omitted in fig. 2. The holding arms 19 of the gripping device according to fig. 2 are held in by recesses, in which the holding arms 19 are arranged at least partially. Alternatively, or additionally, the holding arms 19 may be held or connected to each other by hooks or hook elements. Other connections for the holding arms 19 may also be possible.

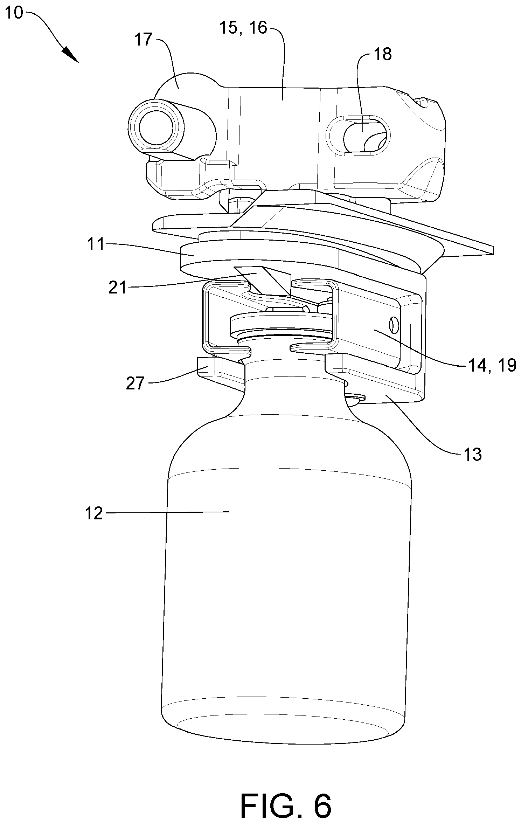

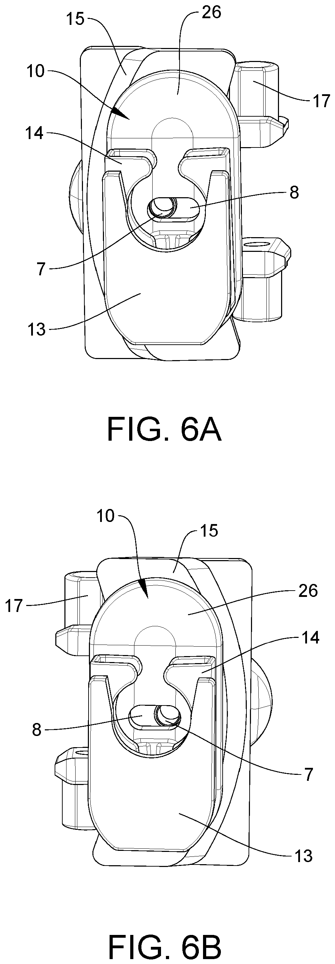

**Fig. 3** is a schematical top view of the gripping device 10 according to an embodiment of the present invention. The embodiment of fig. 3 may correspond to the embodiment of fig. 1. Further, in fig. 3 a slot hole 8 is depicted. The slot hole 8 is designed as a longitudinal through-hole. The slot hole 8 is arranged between the holding arms 19 of the flexible element in the top portion of the gripping device 10. The slot hole 8 extends in a direction from one holding arm 19 to the opposite holding arm 19. In other words, the slot hole 8 extends in a direction at least partially parallel to a direction of movement of the gripping device 10 during operation. The slot hole 8 is configured to receive a fastening element 9. Here, the fastening element 9 may be a pin or a screw. The fastening element 9 may be arranged at least partially freely or variably in the longitudinal hole of the slot hole 8. The gripping device 10 may be connected to a connection portion 15 by the slot hole 8 and the fastening element 9. In other words, the connection between the gripping device 10 and the connection portion 15 may be at least to a certain degree variable and may be adjusted to the specific process in which the gripping device 10 is implemented (see fig. 6a and fig. 6b). Due to the longitudinal hole 8 the orientation of the gripping device 10 may be freely chosen. In other words, the gripping device may be readily attached to the connection portion 15 and/or the gripping device 10 regardless of the orientation of the connection portion 15.

Furthermore, an abutment may be provided which is configured to be a limit or a stop for the flexible element 14. In more detail, the abutment may be used to define at least one of the holding position and receiving position of the flexible element 14. In addition, the abutment may be guided in a longitudinal hole so as to be in a position to variably adjust the abutment. In other words, the abutment may be variable and may be adjusted to the specific process in which the gripping device 10 is implemented.

**Fig. 4** is a schematical side view of the gripping device according to an embodiment of the present invention. The embodiment of fig. 3 may correspond to the embodiment of fig. 1 and/or fig. 3. In fig. 4 a mounting portion for the elastic element 20 is depicted. The mounting portion is provided within the holding arms 19. Thus, the elastic element 20 may be easily suspended and thus exchanged.

**Fig. 5** is a schematical front view of the gripping device according to an embodiment of the present invention. In fig. 5 the interior space 11 is visible. The viewing direction of fig. 5 corresponds to the direction in which the container is inserted into the interior space 11. The further features correspond to these of the previous described embodiments.

**Fig. 6** illustrates the gripping device 10 according to an embodiment of the present invention. In contrast to the described embodiments above, the gripping device 10 illustrated in Fig. 6 comprises a connection portion 15. The connection portion 15 is arranged on the top portion 26. More precisely, the connection portion 15 is arranged on a surface of the top portion 26 that is facing away from the interior space 11. The connection portion 15 allows to connect the gripping device 10 to a transport device (not depicted in fig. 6).

The connection portion 15 comprises at least one engaging element 16. The engaging element 16 comprise a protruding element 17 and a receptacle 18. The protruding element 17 and the receptacle 18 are configured to interact with each a transport device and/or with further gripping devices connected to the same transport device. For example, the protruding element 17 may be inserted into a receptacle 18 of another gripping device arranged adjacent to the gripping device 10. Thus, a connection between the transport device and the gripping devices may be realized which results in a more reliable system. Other means to connect multiple gripping devices 10 with each other are possible.

**Fig 6a** and **Fig. 6b** each illustrates a further possible embodiment of a gripping device 10 and a connection portion 15. The gripping device 10 in fig. 6a and fig. 6b essentially correspond to the gripping device 10 shown in figs. 3 to 6. The gripping devices 10 in fig. 6a and fig. 6b are each connected to the respective connection portion 15.

The connection portions 15 in fig. 6a and fig. 6b are different from each other. The connection portion 15 in Fig. 6a and the connection portion 15 in Fig. 6b are axis-symmetrical. In more detail, the connection sections 15 in Fig. 6a and Fig. 6b are each mirror-image connection portions 15 with respect to each other. The connection portions 15 in fig. 6a and fig. 6b may be each designed to be connected to a conveyor chain, for example, and be moved into a certain direction. As an example, the connection portions 15 according to fig. 6a and fig. 6b may be each designed and intended to move the gripping device 10 in a different, in particular an opposite, direction.

The connection portion 15 comprises a connection bore 7. The connection bore 7 may comprise a thread for a screw. The connection bore 7 is configured to receive the fastening element 9 (see fig. 3). The connection bore is configured as a through hole and is positioned at a fixed position. In an assembled state, the gripping device 10 and the connection portion 15 are connected via the fastening element 9, which extends through the slot hole 8 into the connection bore 7. Thereby, the slot hole 8 further allows to compensate for tolerances. The fastening element 9 may comprise a pin, a screw, a nut or any similar suitable means. Preferably, the fastening element 9 is a screw, which is connected to the connection bore 7 via a thread connection. Generally, the gripping device 10 may be preferably connected to the connecting portion 15 in a form-fitting and/or force-fitting manner.

The gripping devices 10 in fig. 6a and fig. 6b are identical to each other and arranged in the same directional orientation at the respective connection portion 15. The connecting bore 7 of the connection portion 15 in fig. 6a and the connection bore 7 of the connection portion 15 in fig. 6b are each arranged differently offset in relation to the respective gripping device 10. More specifically, the connection bore 7 in fig. 6a is arranged at an axial end of the longitudinal slot hole 8 and the connection bore 7 in fig. 6b is arranged at the opposite axial end of the longitudinal slot hole 8. In both embodiments illustrated in fig 6a and fig. 6b, the connection bore 7 is arranged at the axial end of the slot hole 8 that is farther away from the protruding element 17 of the connection portions 15. Other degrees of offset between the connection bore 7 and the slot hole 8 may also be possible. For example, the connection bore 7 may be arranged in a center area of the slot hole 8.

This offset is compensated by the slot hole 8. The slot hole 8 allows to use the same gripping device 10 for different connection portions 15. In other words, the gripping device 10 comprises a slot hole 8 configured to connect the gripping device 10 to connection portions 15 of different structural and/or geometrical designs. Other geometries aside a longitudinal hole or slot that are suited to compensate an offset of the connection bore 7 as described above may be possible. For example, instead of one longitudinal hole in the gripping device 10, two separate holes could be provided, the holes being arranged so that the position of the holes in the gripping device 10 correspond to the possible positions of the connecting bore 7 in the connecting portion 15.

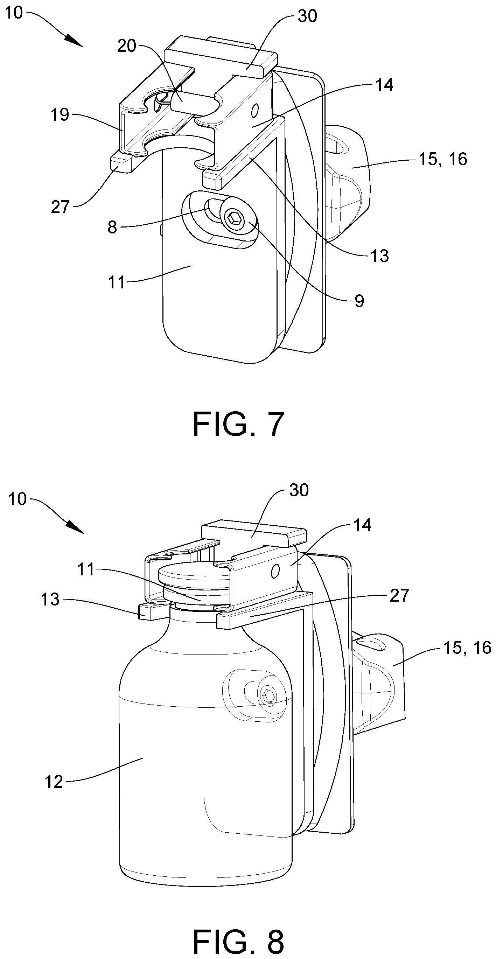

**Fig. 7** and **Fig. 8** illustrate each a further embodiment of a gripping device 10. The support element 13 of the gripping device 10 illustrated in Fig. 7 comprises a L-shaped geometry in cross section.

The flexible element 14 is arranged between the support element 13 and a structure element 30. The structure element 30 comprises a T-shape. The structure element 30 fixates the holding arms 19 of the flexible element 14 in a direction orthogonal to a surface of the support element 13, in particular the surface, which is next to the holding arms 19.

The gripping device 10 comprises a connection portion 15. The connection portion 15 is arranged on a surface of the longer part of the L-shaped geometry. More specifically, the connecting portion 15 is arranged on a surface of the L-shaped geometry facing in a direction opposite to the direction in which the supporting member 13 extends. The connection portion 15 corresponds to the connection portion 15 of the previous embodiment.

In fig. 7 and fig. 8, the gripping device 10 is connected to the connection portion 15 by the fastening element 9, which extends through the slot hole 8. The slot hole 8 here is arranged in a cutout area. This way, the fastening element 9, in this embodiment a screw, does not protrude over the edge of the cutout area and thus prevents the fastening element 9 from damaging the container 12 (see fig. 8).

**Fig. 8** illustrates the gripping device 10 according to Fig. 6. The gripping device 10 in Fig. 7 holds a container 12. As illustrated by comparing Fig. 8, Fig. 6 and Fig. 1, different kind of containers 12, in particular vials, can be used with the gripping device 10.

The gripping device 10 is operated passively. This means, a container 12 can be grabbed simply by pushing the container 12 into the flexible element 14, in particular between the holding means 19. The gripping device 10 provides support for a range of container diameters without the need to change or replace parts. This means, the gripping device 10 is capable to grip multiple types of containers 12 with common neck dimensions throughout a defined size range. The gripping device 10 allows to handle the container 12 without touching the sensitive surfaces, for example the cap. Therefore, various cap designs are possible without affecting the functionality of the gripping device 10. The flexible element 14, in particular the elastic element 20, provides a controlled holding force to gently hold the container 12 during transport. The elastic element 20 may be integrated without the need for any additional fasteners. The gripping device 10 also eliminates the need for guides along a conveyor to maintain control of containers 12.

The gripping device 10 may be preferably made from a synthetic material, in particular plastic. The gripping device 10 may be completely made from a synthetic material. Alternatively, the flexible element and/or the connection portion comprises a non-synthetic material, for example a component comprising metal.

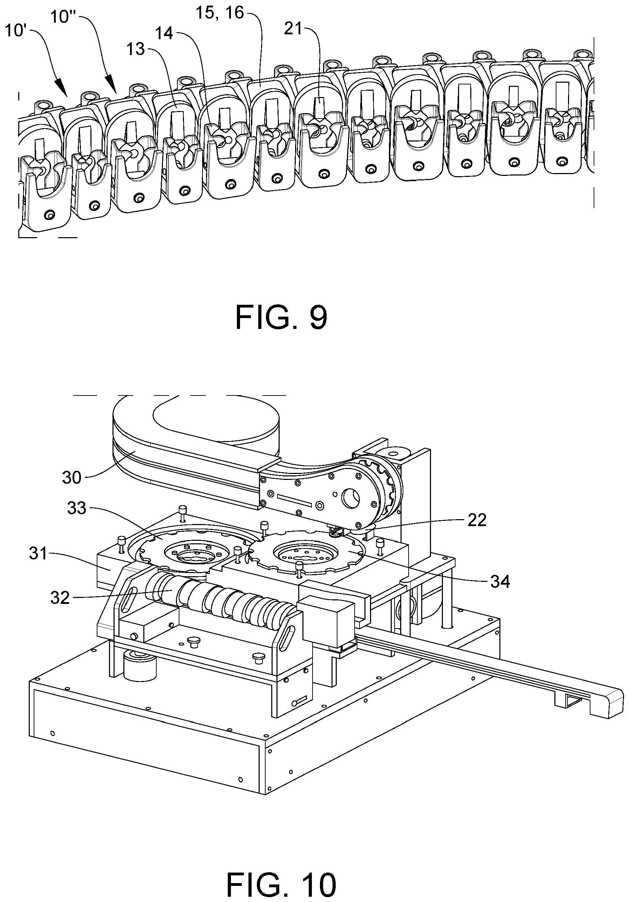

**Fig. 9** shows a transport assembly 22 comprising multiple gripping devices 10. The transport assembly 22 comprises a first gripping devices 10' and second gripping devices 10". The first gripping device 10' and the second gripping device 10" have essentially the same design. The first gripping device 10' and the second gripping device 10" are different in that the first gripping device 10' is configured to hold containers 12 with a smaller range in diameter than the second gripping device 10". Therefore, the second gripping device 10" has larger dimensions than the first gripping device 10'.

The first gripping device 10' and the second gripping device 10" are connected to each other by the connection portion 15 of the respective gripping devices 10', 10". The first and second gripping device 10', 10" are assembled in an alternating manner. By doing this, a wider range of containers 12 with different dimension can be grabbed by the assembly. The transport assembly 22 may be configured to be connected to a conveyor flight (see Fig. 10). The transport assembly 22 may be connected to the conveyor flight by the connection portion 15.

**Fig. 10** is a perspective and schematic view of a transport assembly 22 according to an embodiment of the present invention. The transport assembly 22 comprises gripping devices 10 as shown in Fig. 9. The transport assembly 22 comprises a conveyor flight 30 and a feeding device 31.

The conveyor flight 30 is driven by a motor, for example an electric motor. The conveyor flight 30 is the element of the conveyor system that moves along the defined transportation directions. The assembly 22 including the gripping devices 10 is connected to the conveyor flight 30. The transport assembly 22 including the gripping devices 10 moves with the conveyor flight 30 to transport the containers 12. The conveyor flight 30 may be a chain element or a belt element with connection means to connect the transport assembly 22 including gripping devices 10 to the conveyor flight 30.

The feeding device 31 comprises a screw element 32, a first star wheel 33 and a second star wheel 34. It may be possible that the feeding device 31 may only comprise the screw element 32 or one of the star wheels.

The screw element 32 is designed as a screw. The screw element 32 comprises an infeed end and an outfeed end. The infeed end is the end, where new containers 12 are fed to the screw element 32. The outfeed end is the end where the containers 12 leave the screw element 32.

The screw element 32 has a gradual thread pitch. In other words, the pitch of the screw is flattening from the infeed end towards the outfeed end. Another gradual pitch may be possible. The width of the pitch corresponds to geometry of the containers 12 to be transported. The screw element 30 transports the containers 12 from the infeed end to the outfeed end by rotating.

The containers 12 are picked up at the outfeed end by the first star wheel 33. The first star wheel 33 has a ring-shaped geometry. At the radial outer surface of the first star wheel 33, the star wheel 33 comprises retainers. The retainers pick up the containers 12 at the outfeed end of the screw element 32 and transport the containers 12 to an outfeed point of the first star wheel 33.

At the outfeed point of the first star wheel 33, the containers 12 are picked up by the second star wheel 34. The second star wheel 34 is identical to the first star wheel 33 or has a similar design as the first star wheel 34. The second star wheel 34 transports the containers 12 to a handoff point. At the handoff point, the containers 12 are taken by the gripping devices 10 on the conveyor flight 30.

The first star wheel 33 and/or the second star wheel 34 are arranged on different heights. In other words, the first star wheel 33 and the second star wheel 34 are arranged parallel to each other, i.e., on parallel planes. The path of the containers 12, when being transported by the star wheels, may comprise a helical ramp. This allows to move the containers 12 in a vertical direction.

The present disclosure has been described in conjunction with a preferred embodiments as examples. However, other variations can be understood and effected by those persons skilled in the art and practicing the claimed invention, from the studies of the drawings, this disclosure and the claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

### Reference numerals:

- 7: connection bore
- 8: slot hole
- 9: fastening element
- 10: gripping device
- 11: interior space
- 12: container
- 13: support element
- 14: flexible element
- 15: connection portion
- 16: engaging element
- 17: protruding element
- 18: receptacle
- 19: holding arms
- 20: elastic element
- 21: guide element
- 22: transport assembly
- 23: conveyor system
- 25: feeding device
- 26: top portion
- 27: finger elements
- 28: projection
- 29: pin element
- 30: conveyor flight
- 31: feeding device
- 32: screw element
- 33: first star wheel
- 34: second star wheel

## Claims

1. Gripping device (10) for transporting a container (12), preferably pharmaceutical container (12), comprising:
a support element (13) configured to support the container (12), and
a flexible element (14) configured to grab the container (12).

2. The gripping device (10) according to claim 1, wherein the gripping device (10) comprises a connection portion (15) configured to connect the gripping device (10) to a transport device.

3. The gripping device (10) according to claim 1 or 2, wherein the flexible element is configured to be transferred between a receiving position and a holding position.

4. The gripping device (10) according to any one of the preceding claims, wherein the flexible element (14) comprises two holding arms (19).

5. The gripping device (10) according to any one of the preceding claims, wherein the flexible element (14) is configured to be moved with respect to the support element (13).

6. The gripping device (10) according to any one of the preceding claims, wherein the gripping device (10) comprises an elastic element (20) configured to apply a restoring force to the flexible element (14).

7. The gripping device (10) according to any one of the preceding claims, wherein each holding arm (19) comprises a fitting portion configured to be fitted to the container (12) to be grabbed.

8. The gripping device (10) according to any one of the preceding claims, wherein flexible element (14) and/or the support element (13) comprises an at least partially rounded geometry.

9. The gripping device (10) according to any one of the preceding claims, wherein the gripping device (10) comprises a guide element (21).

10. The gripping device (10) according to any one of the preceding claims, wherein the gripping device (10) defines an interior space in which the container (12) can be at least partially received.

11. The gripping device (10) according to any one of the preceding claims, wherein the gripping device (10) comprises an abutment for definition a position of the flexible element (14)

12. A transport assembly (22) for transporting containers, comprising
at least two gripping devices (10) according to any of preceding claims, and
a transport device,
wherein the gripping devices (10) are connected to the transport device.

13. Transport assembly (22) according to claim 11, wherein the transport assembly (22) is configured to transport the containers in three dimensions.

14. Transport assembly (22) according to claim 12, wherein at least two types of gripping devices (10', 10") differs from each other.

15. Method for gripping a container (12), comprising:
contacting a container with a flexible element (14),
grabbing the container with the flexible element (14),
holding the container by a support element (13).
